# EUROPEAN PATENT APPLICATION

(11) **EP 4 685 785 A1**
(43) Date of publication of application: **28.01.2026**
(21) Application number: 24222744.5
(22) Date of filing: 23.12.2024
(51) Int. Cl.: G09G 3/34

(54) **DISPLAY DEVICE AND OPERATING METHOD THEREOF**

(30) Priority: 26.07.2024 KR 20240099230
(71) Applicant: LG Electronics Inc., Yeongdeungpo-gu Seoul 07336 (KR)
(72) Inventor: JUNG, Moongu, 08592 Seoul (KR); PARK, Jinsin, 08592 Seoul (KR); JUNG, Yongmin, 08592 Seoul (KR); YOON, Jihye, 08592 Seoul (KR); HWANG, Woongjoon, 08592 Seoul (KR)
(74) Representative: Vossius & Partner Patentanwälte Rechtsanwälte mbB

(57) **Abstract**

A display device according to an embodiment of the present disclosure may comprise a liquid crystal display panel; a plurality of backlight blocks configured to output a light to the liquid crystal display panel, wherein each backlight block includes one or more light sources and each light source is formed of KSF (Kalium Silicon Floride) phosphor; a light source driving circuit configured to generate a light source driving signal with a duty for controlling light output of each backlight block; and a controller configured to determine whether the display device is operating in an image output mode that inserts a black frame between image frames, and control the light source driving circuit to apply one or more backlight on signals to the light source in the insertion interval of the black frame when operating in the image output mode.

## Description

### BACKGROUND OF THE INVENTION

### 1. Field of the Invention

The present disclosure relates to a display device, and more specifically, to a display device having a liquid crystal display panel.

### 2. Discussion of the Related Art

Liquid crystal displays may be miniaturized compared to cathode ray tube (CRT), so they are used in display device such as portable information device, office equipment, and computer.

Transmissive liquid crystal display, which make up the majority of liquid crystal display device, displays image by controlling the electric field applied to the liquid crystal layer to modulate light incident from a backlight.

Recently, LED (Light Emitting Diode) using KSF (Kalium Silicon Floride) phosphor has been released as a backlight light source. KSF phosphor is a phosphor that emits Deep Red light and is used for excellent color reproduction.

A light source driving signal such as pulse width modulation (PWM) with duty is applied to the light source of the backlight. On or off of the light source is controlled by turning on or off the PWM signal.

Due to its own characteristics, the KSF phosphor generates a phenomenon in which red luminance is excited compared to green and blue in the duty-off interval of the PWM signal.

When red luminance is excited, a red afterimage may remain, affecting the image quality of the image.

One way to solve this problem is to increase the driving frequency of the PWM signal. Increasing the driving frequency of the PWM signal reduces the turn-off time of the light source, which may reduce visibility of the red afterimage.

To reduce image blur, an image output mode (or Black Frame Insert, BFI mode) is used that inserts black frame between image frames. In BFI mode, because the driving frequency of the PWM signal is lowered, the turn-off time of the light source is increased, resulting in a larger red afterimage due to the excitation of red luminance.

In other words, when using an LED with KSF phosphor as a light source, in BFI mode, unlike before, the driving frequency of the PWM signal must be lowered, resulting in a larger red afterimage due to the excitation of red luminance.

### SUMMARY OF THE INVENTION

The purpose of the present disclosure may be to prevent red afterimage by applying a light source driving signal to the turn-off interval of the light source in an image output mode in which a KSF phosphor is used as a light source and a black frame is inserted.

The purpose of the present disclosure may be to prevent red afterimage by finely adjusting the turn-on of the light source driving signal during the turn-off interval of the existing light source in an image output mode in which a KSF phosphor is used as a light source and a black frame is inserted.

The purpose of the present disclosure may be to prevent red afterimage by applying a light source driving signal to the turn-off interval of the light source to a degree that does not significantly affect the black frame in an image output mode in which a KSF phosphor is used as a light source and a black frame is inserted.

A display device according to an embodiment of the present disclosure may comprise a liquid crystal display panel; a plurality of backlight blocks configured to output a light to the liquid crystal display panel, wherein each backlight block includes one or more light sources and each light source is formed of KSF (Kalium Silicon Floride) phosphor; a light source driving circuit configured to generate a light source driving signal with a duty for controlling light output of each backlight block; and a controller configured to determine whether the display device is operating in an image output mode that inserts a black frame between image frames, and control the light source driving circuit to apply one or more backlight on signals to the light source in the insertion interval of the black frame when operating in the image output mode.

An operating method of a display device according to an embodiment of the present disclosure, wherein the display device comprises a liquid crystal display panel, a plurality of backlight blocks configured to output a light to the liquid crystal display panel, wherein each backlight block includes one or more light sources and each light source is formed of KSF (Kalium Silicon Floride) phosphor, a light source driving circuit configured to generate a light source driving signal with a duty for controlling light output of each backlight block, wherein the method comprises: determining whether the display device is operating in an image output mode that inserts a black frame between image frames; and controlling the light source driving circuit to apply one or more backlight on signals to the light source in the insertion interval of the black frame when operating in the image output mode.

According to an embodiment of the present disclosure, a backlight on signal may be applied to the duty-off interval corresponding to the insertion interval of the black frame to prevent red afterimage that occur due to the use of the KSF phosphor. As the duty-off interval is shortened, the red afterimage caused by the use of KSF phosphor may be reduced.

According to an embodiment of the present disclosure, in order to prevent red afterimage that occur due to the use of the KSF phosphor, the driving frequency of the light source driving signal is increased, and the backlight on signal is applied to the duty-off interval corresponding to the insertion interval of the black frame. The duty-off interval is shortened, and red afterimage may be effectively reduced as the light source driving frequency increases.

### BRIEF DESCRIPTION OF THE DRAWINGS

FIG. 1 is a diagram illustrating a display device according to an embodiment of the present invention.
FIG. 2 is an example of a block diagram of the inside of the display device in FIG. 1.
FIG. 3 is an example of a block diagram of the inside of a controller in FIG. 2.
FIG. 4 is a block diagram of the inside of the display.
FIG. 5 is an example showing arrangement of a liquid crystal display panel and light sources in a direct-type backlight.
FIG. 6 is an example showing arrangement of a liquid crystal display panel and light sources in an edge type backlight.
FIG. 7 is an example of a light source driving circuit according to an embodiment of the present disclosure.
FIGS. 8 to 10 are diagrams illustrating the process by which a red afterimage is generated when KSF phosphor is applied to an LED used as a light source of a backlight.
FIG. 11 is a diagram illustrating a method for improving the red afterimage that occurs when KSF phosphor is applied to an LED used as a backlight light source.
FIGS. 12A and 12B are diagrams illustrating that when the driving frequency of the PWM signal increases, the gray level expression of the image decreases.
FIG. 13 is a diagram showing that when the driving frequency of the PWM signal increases from 120Hz to 480Hz, the resolution of the image decreases.
FIG. 14 is a flowchart explaining a method of operating a display device according to an embodiment of the present disclosure.
FIG. 15 is a diagram illustrating an example of a light source driving signal applied to a light source in each of normal mode and BFI mode according to the prior art.
FIGS. 16A to 16C are diagrams illustrating an interval between backlight on signals applied to the duty-off interval of the light source driving signal when operating in BFI mode according to an embodiment of the present disclosure.
FIGS. 17A and 17B are diagrams illustrating an amplitude of the backlight on signal applied to the duty-off interval of the light source driving signal when operating in BFI mode according to an embodiment of the present disclosure.
FIGS. 18A and 18B are diagrams illustrating the duty of a backlight on signal applied to the duty-off interval of the light source driving signal when operating in BFI mode according to an embodiment of the present disclosure.
FIGS. 19A and 19B are diagrams illustrating the duty and interval of the backlight on signal applied to the duty-off interval of the light source driving signal when operating in BFI mode according to an embodiment of the present disclosure.
FIGS. 20A and 20B are diagrams illustrating the duty, amplitude, and interval of the backlight on signal applied to the duty-off interval of the light source driving signal according to an embodiment of the present disclosure.
FIG. 21 is a diagram explaining the light source driving signal applied to the light source in each of the normal mode and BFI mode when the frequency of the light source driving signal is increased.
FIGS. 22 and 23 are diagrams illustrating the interval between backlight on signals applied to the duty-off interval of the light source driving signal in BFI mode when the driving frequency of the light source driving signal is increased according to an embodiment of the present disclosure.
FIG. 24 is a diagram illustrating the amplitude between backlight on signals applied to the duty-off interval of the light source driving signal in BFI mode when the driving frequency of the light source driving signal is increased according to an embodiment of the present disclosure.
FIG. 25 is a diagram illustrating the duty between backlight on signals applied to the duty-off interval of the light source driving signal in BFI mode when the driving frequency of the light source driving signal is increased according to an embodiment of the present disclosure.
FIG. 26 is a diagram illustrating the duty, amplitude, and interval of the backlight on signal applied to the duty-off interval of the light source driving signal under BFI mode when the driving frequency of the light source driving signal is increased according to an embodiment of the present disclosure.

### DETAILED DESCRIPTION OF THE PREFERRED EMBODIMENTS

Hereinafter, the present specification will be described in more detail with reference to the drawings.

The suffixes "module" and "part" used in the following description are assigned purely for the convenience of drafting this specification and do not inherently impart any special significance or role. Therefore, the terms "module" and "part" may be used interchangeably with each other.

Terms containing ordinal numbers, such as first, second, etc, may be used to describe various components, but the components are not limited by the terms. The above terms are used only for the purpose of distinguishing one component from another.

Singular expression includes plural expressions unless the context clearly dictates otherwise.

In this application, terms such as "comprise" or "have" are intended to designate the presence of features, numbers, steps, operations, components, parts, or combinations thereof described in the specification, but are not intended to indicate the presence of one or more other features and it should be understood that this does not exclude in advance the possibility of the existence or addition of elements, numbers, steps, operations, components, parts, or combinations thereof.

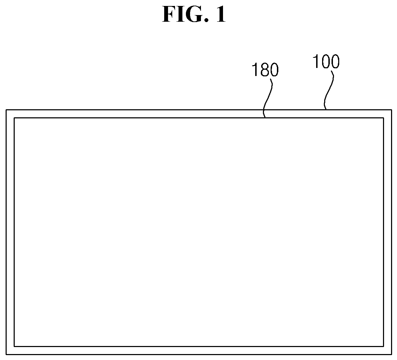

FIG. 1 is a diagram illustrating a display device according to an embodiment of the present disclosure.

The display device 100 may include a display 180.

The display (180) may be implemented as either a Liquid Crystal Display (LCD) panel or an Organic Light Emitting Diode (OLED) panel.

Meanwhile, the display device 100 of FIG. 1 may be a monitor, TV, tablet PC, mobile terminal, etc.

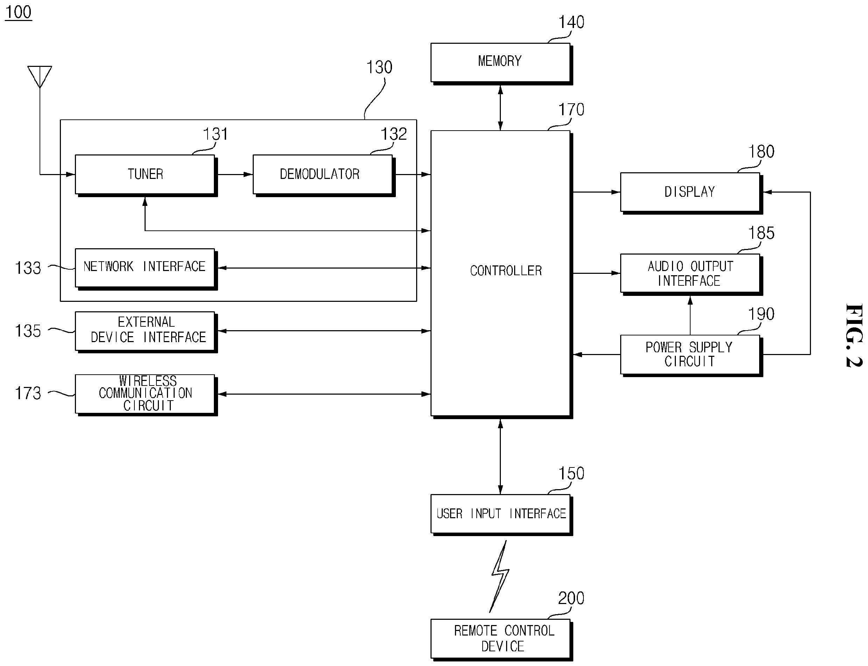

FIG. 2 is a block diagram showing the configuration of the display device of FIG. 1.

Referring to FIG. 2, the display device 100 may include an image receiver 130, an external device interface 135, a memory 140, a user input interface 150, a controller 170, and a wireless communication circuit 173, a display 180, an audio output interface 185, and a power supply circuit 190.

The image receiver 130 may include a tuner 131, a demodulator 132, and a network interface 133.

The tuner 131 may select a specific broadcast channel according to a channel selection command. The tuner 131 may receive a broadcast signal for a specific selected broadcast channel.

The demodulator 132 may separate the received broadcast signal into a image signal, an audio signal, and a data signal related to the broadcast program, and may restore the separated image signal, audio signal, and data signal to a form that may be output.

The external device interface 135 may receive an application or application list in an adjacent external device and transmit it to the controller 170 or the memory 140.

The external device interface 135 may provide a connection path between the display device 100 and an external device. The external device interface 135 may receive one or more of image and audio output from an external device connected wirelessly or wired to the display device 100 and transmit it to the controller 170. The external device interface 135 may include a plurality of external input terminals. The plurality of external input terminals may include an RGB terminal, one or more High Definition Multimedia Interface (HDMI) terminals, and a component terminal.

An image signal from an external device input through the external device interface 135 may be output through the display 180. A audio signal from an external device input through the external device interface 135 may be output through the audio output interface 185.

An external device that may be connected to the external device interface 135 may be any one of a set-top box, Blu-ray player, DVD player, game console, sound bar, smartphone, PC, USB memory, or home theater, but this is only an example.

The network interface 133 may provide an interface for connecting the display device 100 to a wired/wireless network including an Internet network. The network interface 133 may transmit or receive data to or from other users or other electronic devices through a connected network or another network linked to the connected network.

In addition, a part of content data stored in the display device 100 may be transmitted to a selected user among a selected user or a selected electronic device among other users or other electronic devices registered in advance in the display device 100.

The network interface 133 may access a predetermined web page through the connected network or the other network linked to the connected network. That is, it is possible to access a predetermined web page through a network, and transmit or receive data to or from a corresponding server.

In addition, the network interface 133 may receive content or data provided by a content provider or a network operator. That is, the network interface 133 may receive content such as movies, advertisements, games, VOD, and broadcast signals and information related thereto provided from a content provider or a network provider through a network.

In addition, the network interface 133 may receive update information and update files of firmware provided by the network operator, and may transmit data to an Internet or content provider or a network operator.

The network interface 133 may select and receive a desired application from among applications that are open to the public through a network.

The memory 140 stores program for processing and controlling each signal in the controller 170, and may store signal-processed image, audio, or data signal.

The memory 140 may perform a function for temporarily storing image, voice, or data signal input from the external device interface 135 or the network interface 133, and may store information about a predetermined image through a channel memory function.

The memory 140 may store an application or a list of applications input from the external device interface 135 or the network interface 133.

The display device 100 may play back a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal. Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 100.

In addition, the controller 170 may control the display device 100 by a user command input through the user input interface 150 or an internal program and connect to a network to download an application a list of applications or applications desired by the user to the display device 100.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing back an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface unit or an image which is stored in the memory 140 to be displayed on the display 180. In this case, an image being displayed on the display 180 may be a still image or a moving image, and may be a 2D image or a 3D image.

In addition, the controller 170 may allow content stored in the display device 100, received broadcast content, or external input content input from the outside to be played back, and the content may have various forms such as a broadcast image, an external input image, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Bluetooth^{™}, Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication interface 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, the another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication interface 173 may detect (or recognize) a wearable device capable of communication around the display device 100.

Furthermore, when the detected wearable device is an authenticated device to communicate with the display device 100 according to the present disclosure, the controller 170 may transmit at least a portion of data processed by the display device 100 to the wearable device through the wireless communication interface 173. Therefore, a user of the wearable device may use data processed by the display device 100 through the wearable device.

The display 180 may convert image signal, data signal, and OSD signal processed by the controller 170, or image signal or data signal received from the external device interface 135 into R, G, and B signals, and generate drive signal.

Meanwhile, since the display device 100 shown in FIG. 1 is only an embodiment of the present disclosure, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 1, the display device 100 may receive an image through the network interface 133 or the external device interface 135 without a tuner 131 and a demodulator 132 and play back the same.

For example, the display device 100 may be divided into an image processing device, such as a set-top box, for receiving broadcast signals or content according to various network services, and a content playback device that plays back content input from the image processing device.

In this case, an operation method of the display device according to an embodiment of the present disclosure will be described below may be implemented by not only the display device 100 as described with reference to FIG. 1 and but also one of an image processing device such as the separated set-top box and a content playback device including the display 180 and the speaker 185.

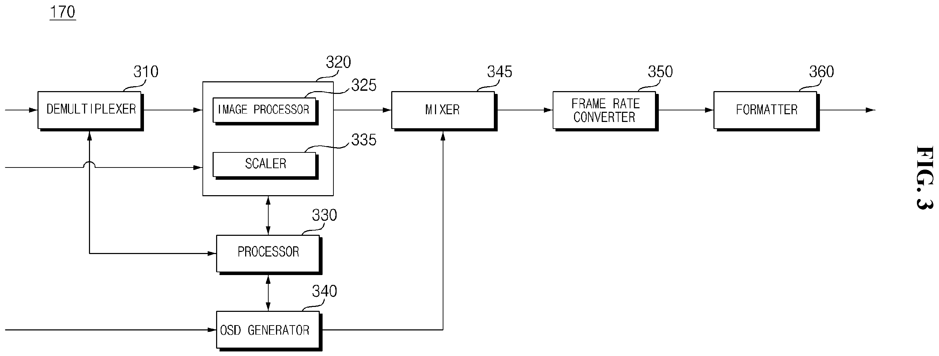

FIG. 3 is an example of an internal block diagram of the controller of FIG. 2.

When described with reference to the drawing, the controller 170 according to an embodiment of the present disclosure may include a demultiplexer 310, an image processor 320, a processor 330, an OSD generator 340, and a mixer 345 , a frame rate converter 350, and a formatter 360.
the controller 170 may further include an audio processor (not shown) and a data processor (not shown).

The demultiplexer 310 demultiplexes the input stream. For example, when MPEG-2 TS is input, it may be demultiplexed and separated into image, voice, and data signals. Here, the stream signal input to the demultiplexer 310 may be a stream signal output from the tuner 110, the demodulator 120, or the external device interface 130.

The image processor 320 may perform image processing of demultiplexed image signal. For this purpose, the image processor 320 may include an image decoder 325 and a scaler 335.

The image decoder 325 decodes the demultiplexed image signal, and the scaler 335 performs scaling so that the resolution of the decoded image signal may be output on the display 180.

The image decoder 325 may be equipped with decoder of various standards. For example, an MPEG-2, H,264 decoder, a 3D image decoder for color image and depth image, a decoder for multiple viewpoint images, etc. may be provided.

The processor 330 may control overall operations within the display device 100 or the controller 170. For example, the processor 330 may control the tuner 110 to select (tuning) an RF broadcast corresponding to a channel selected by the user or a pre-stored channel.

The processor 330 may control the display device 100 by a user command or internal program input through the user input interface 150.

The processor 330 may perform data transmission control with the network interface 135 or the external device interface 135.

The processor 330 may control the operations of the demultiplexer 310, the image processor 320, and the OSD generator 340 within the controller 170.

The OSD generator 340 generates an OSD signal according to user input or by itself. For example, based on a user input signal, a signal may be generated to display various information in graphic or text on the screen of the display 180. The generated OSD signal may include various data such as a user interface screen of the display device 100, various menu screen, widget, and icon. Additionally, the generated OSD signal may include 2D object or 3D object.

Additionally, the OSD generator 340 may generate a pointer that may be displayed on the display 180 based on the pointing signal input from the remote control device 200. In particular, such a pointer may be generated in a pointing signal processor, and the OSD generator 340 may include such a pointing signal processor (not shown). Of course, it is also possible that the pointing signal processor (not shown) is provided separately rather than within the OSD generator 340.

The mixer 345 may mix the OSD signal generated by the OSD generator 340 and the decoded image signal processed by the image processor 320. The mixed image signal is provided to the frame rate converter 350.

The frame rate converter (FRC) 350 may convert the frame rate of the input image. Meanwhile, the frame rate converter 350 is also capable of outputting the image as is without separate frame rate conversion.

Meanwhile, the formatter 360 may change the format of an input image signal into a image signal for display on a display and output it.

The formatter 360 may change the format of the image signal. For example, the format of the 3D image signal may be changed to any one of various 3D formats such as Side by Side format, Top / Down format, Frame Sequential format, Interlaced format, Checker Box format.

Meanwhile, the audio processor (not shown) in the controller 170 may perform audio processing of the demultiplexed audio signal. For this purpose, the audio processor (not shown) may be equipped with various decoders.

Additionally, the audio processor (not shown) within the controller 170 may process bass, treble, and volume control.

The data processor (not shown) within the controller 170 may perform data processing of the demultiplexed data signal. For example, if the demultiplexed data signal is an encoded data signal, it may be decoded. The encoded data signal may be electronic program guide information including broadcast information such as the start time and end time of the broadcast program aired on each channel.

Meanwhile, the block diagram of the controller 170 shown in FIG. 3 is a block diagram for an embodiment of the present disclosure. Each component of the block diagram may be integrated, added, or omitted depending on the specifications of the controller 170 that is actually implemented.

In particular, the frame rate converter 350 and the formatter 360 may not be provided within the controller 170, but may be provided separately or as a single module.

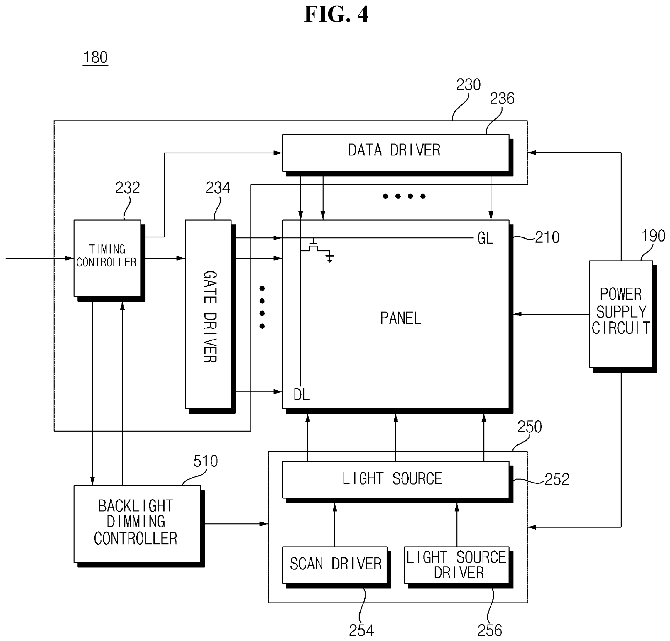

FIG. 4 is an internal block diagram of the display of FIG. 2.

Referring to the drawing, the display module 180 based on a liquid crystal display panel (LCD panel) may include a liquid crystal display panel 210, a driving circuit 230, a backlight 250, and a backlight dimming controller 510.

In order to display an image, a plurality of gate lines (GL) and data lines (DL) are intersected in a matrix form, and the liquid crystal display panel 210 may include a first substrate a thin film transistor and a pixel electrode connected to it are formed in the intersecting area, a second substrate provided with a common electrode, and a liquid crystal layer formed between the first substrate and the second substrate.

The driving circuit 230 drives the liquid crystal display panel 210 through control signal and data signal supplied from the controller 170 of FIG. 1. To this end, the driving circuit 230 includes a timing controller 232, a gate driver 234, and a data driver 236.

The timing controller 232 receives a control signal, R, G, B data signals, vertical synchronization signal (Vsync), etc. from the controller 170, and controls the gate driver 234 and the data driver 236 in response to the control signal and rearranges the R, G, and B data signals to provide to the data driver 236.

Under the control of the gate driver 234, data driver 236, and timing controller 232, scanning signal and image signal are supplied to the liquid crystal display panel 210 through the gate line (GL) and data line (DL).

The backlight 250 supplies light to the liquid crystal display panel 210. To this end, the backlight 250 may include a light source 252, a smay driver 254 that controls the scanning drive of the light source 252, and a light source driver 256 that turns on/off the light source 252.

With the light transmittance of the liquid crystal layer adjusted by the electric field formed between the pixel electrode and the common electrode of the liquid crystal display panel 210, a predetermined image is displayed using light emitted from the backlight 250.

The power supply circuit 190 may supply a common electrode voltage (Vcom) to the liquid crystal display panel 210 and a gamma voltage to the data driver 236. Additionally, driving power for driving the light source 252 may be supplied to the backlight 250.

Meanwhile, the backlight 250 may be divided into a plurality of blocks and driven. The controller 170 may control the display 180 to perform local dimming by setting a dimming value for each of the plurality of blocks.

Specifically, the timing controller 232 outputs input image data (RGB) to the backlight dimming controller 510, and the backlight dimming controller 510 may calculate the dimming value of each of the plurality of blocks based on the input image data (RGB) received from the timing controller 232.

The backlight dimming controller 510 may output dimming values to the backlight 250. The dimming value may include at least one of a duty ratio for driving each backlight block or a current magnitude ratio.

The backlight dimming controller 510 may be included in the controller 170.

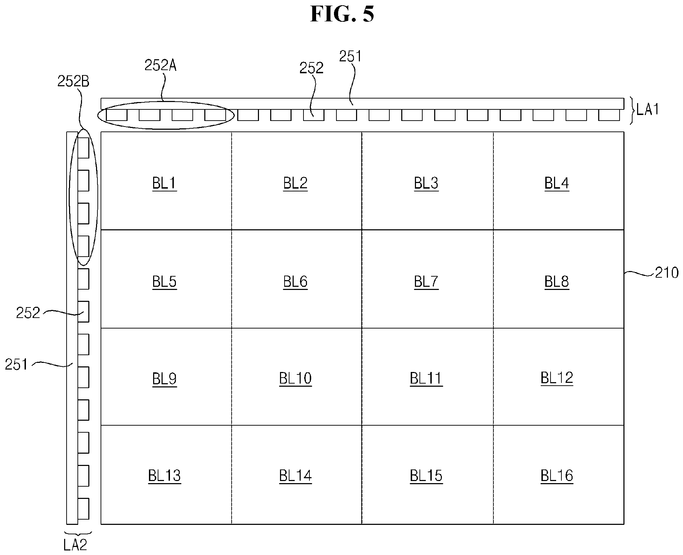

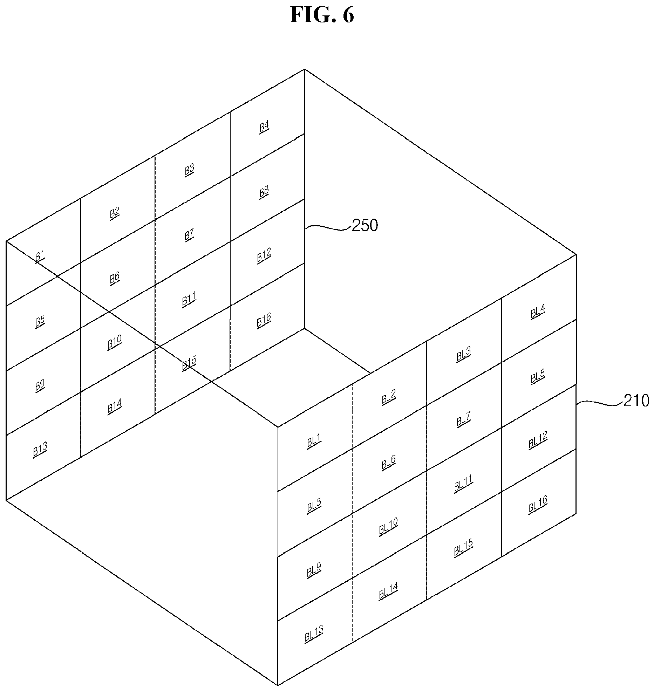

FIG. 5 is an example diagram showing the arrangement of a liquid crystal display panel and light sources in the case of an edge-type backlight, and FIG. 6 is an example diagram showing the arrangement of a liquid crystal display panel and light sources in the case of a direct-type backlight.

The liquid crystal display panel 210 may be divided into a plurality of panel blocks as shown in FIGS. 5 and 6. FIGS. 5 and 6 illustrate that the liquid crystal display panel 210 is equally divided into 16 blocks BL1 to BL16, but it should be noted that it is not limited thereto. Each of the plurality of panel blocks may include a plurality of pixels.

The backlight 250 may be implemented as either an edge type or a direct type.

The edge-type backlight 250 has a structure in which a plurality of optical sheets and a light guide plate are stacked below the liquid crystal display panel 210, and a plurality of light sources are disposed on the sides of the light guide plate.

When the backlight 250 is implemented as an edge-type backlight, light sources are disposed on at least one of the upper and lower sides and at least one of the left and right sides of the liquid crystal display panel 210.

In FIG. 5, the first light source array LA1 is disposed on the upper side of the liquid crystal display panel 210, and the second light source array LA2 is disposed on the left side of the liquid crystal display panel 210. Each of the first and second light source arrays LA1 and LA2 includes a plurality of light sources 252 and a light source circuit board 251 on which the plurality of light sources 252 are mounted. In this case, the brightness of the light incident on the first block BL1 of the liquid crystal display panel 210 may be adjusted using the light sources 252A of the first light source array LA1 disposed at a position corresponding to the first block BL1 of the liquid crystal display panel 210 and and the light sources 252B of the second light source array LA2.

The direct backlight 250 has a structure in which a plurality of optical sheets and a diffusion plate are stacked below the liquid crystal display panel 210 and a plurality of light sources are arranged below the diffusion plate.

When the backlight 250 is implemented as a direct backlight, it is divided to correspond one-to-one to the blocks BL 1 to BL16 of the liquid crystal display panel 210, as shown in FIG. 6. In this case, the brightness of the light incident on the first block BL1 of the liquid crystal display panel 210 may be adjusted using the light sources 252 included in the block B1 of the backlight 250 disposed at a position corresponding to the first block BL1 of the liquid crystal display panel 210.

The light sources 252 may be implemented as point light sources such as light emitting diodes (LEDs). The light sources 252 are turned on and off by receiving a light source driving signal (LDS) from the light source driver 256.

The light source driving signal may be a PWM (Pulse Width Modulation) signal.

The light intensity of the light sources 252 may be adjusted according to the amplitude of the light source driving signal (LDS), and the lighting period may be adjusted according to the pulse width (or duty ratio). The brightness of light output from the light sources 252 may be adjusted according to the light source driving signal (LDS).

The light source driver 256 may generate the light source driving signal (LDS) based on the dimming value of each block input from the backlight dimming controller 510 and output them to the light source 252.

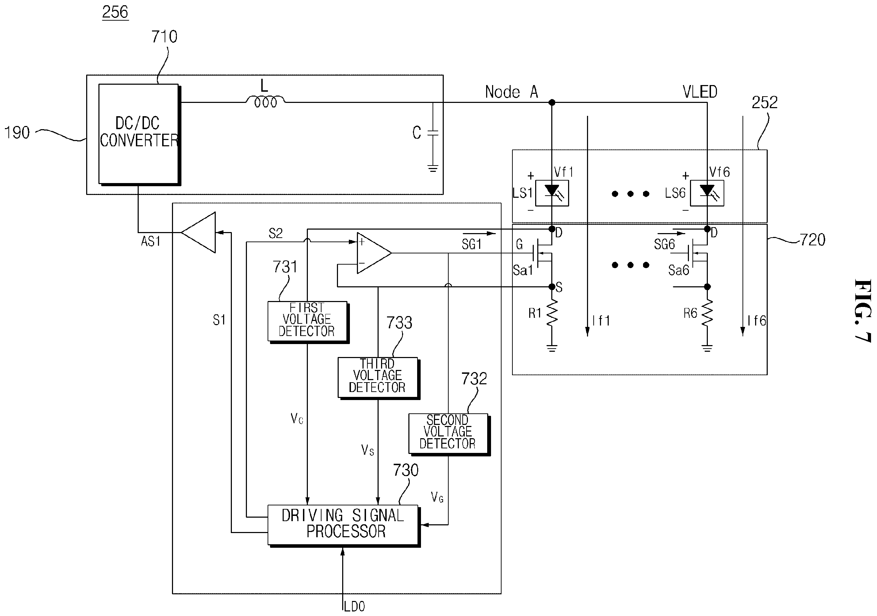

FIG. 7 is an example of a light source driving circuit according to an embodiment of the present disclosure.

The light source driving circuit 256 may include a light source control circuit 720 that drives a plurality of light sources (LS1 to LS6) 252 and a driving signal processor 730 that controls the light source control circuit 720.

The light source driving circuit 256 may receive a power from the power supply circuit 190. The power supply circuit 190 may supply a common power source (VLED) to a plurality of light sources (LS1 to LS6) 252 connected in parallel.

Each of the light sources LS1 to LS6 represents a light source, and each light source may include a plurality of LEDs in series.

Meanwhile, as the resolution of the display device 100 increases to High Definition (HD), Full HD, Ultra High Definition (UHD), 4K, 8K, etc, the number of LEDs may increase.

Meanwhile, when using the high-resolution display panel 210, in order to improve contrast, it is desirable to control the current If with a changed level to flow for each light source based on local dimming data.

According to this, by allowing the level-changed current If to flow in proportion to the local dimming data, a light of different luminance according to the local dimming data is output for each of the plurality of light sources LS1 to LS6.

Accordingly, due to the current If whose level is increased, the luminance of the bright part becomes brighter and the luminance of the dark part becomes darker. Ultimately, the contrast when displaying an image is improved, and the sharpness when displaying an image is improved.

The power supply circuit 190 outputs a common voltage (VLED) to a plurality of light sources. For this purpose, the power supply circuit 190 may include a dc/dc converter 710 for converting the level of a direct current power and outputs it, an inductor (L) for removing harmonics, etc, and a capacitor (C) for storing the direct current power.

The voltage across the capacitor (C) corresponds to the voltage supplied between node A and a ground terminal, which corresponds the voltage applied to a plurality of light sources (LS1 to LS6) 252 and a plurality of switching elements (Sa1 to Sa6), and the resistance elements (R1 to R6). That is, the voltage of node A is the common voltage supplied to the plurality of light sources LS1 to LS6, and may be referred to as the VLED voltage, as shown in the figure.

The VLED voltage is equal to a sum of a driving voltage (Vf1) of a first light source (LS1), a voltage across a first switching element (Sa), and a voltage consumed in a first resistance element (Ra).

Alternatively, the VLED voltage is equal to a sum of a driving voltage (Vf2) of a second light source (LS2), a voltage across a second switching element (Sa2), and a voltage consumed in a second resistance element (Rb). Alternatively, the VLED voltage is equal to a sum of a driving voltage (Vf6) of a sixth light source (LS6), a voltage across a sixth switching element (Sa6), and a voltage consumed in a sixth resistance element (R6).

Meanwhile, as the resolution of the display panel 210 increases, the backlight driving voltage (Vfl to Vf6) increases and the driving current (Ifl to If6) flowing through the backlight also increases.

Meanwhile, the driving signal processor 730 includes a first voltage detector 731 that detects a voltage VD of each drain terminal (G) of the plurality of switching elements (Sa1 to Sa6) implemented with FET, etc.

Meanwhile, the driving signal processor 730 may further include a second voltage detector 732 that detects a voltage (VG) of each gate terminal (G), and a third voltage detector 733 that detects a voltage (VS) of each source terminal (S).

The driving signal processor 730 may compare each drain terminal voltage (VD) detected at each drain terminal (G) of the plurality of switching elements (Sa1 to Sa6), and based on the lowest drain terminal voltage among them, generate a target driving current flowing through the plurality of light sources LS1 to LS6 and output a switching control signal SG corresponding to the generated target driving current.

The switching control signal (SG) is input to the comparator, and when it is greater than the detected voltage (VD) of the source terminal, it is output from the comparator and input to the gate terminal (G). Ultimately, the switching element is driven based on the switching control signal (SG).

Meanwhile, in order to generate this switching control signal, the driving signal processor 730 may include a light source processor 730 that generates a switching control signal for driving each gate terminal of the plurality of switching elements Sa1 to Sa6 based on the voltage of each drain terminal of the plurality of switching elements Sa1 to Sa6.

Meanwhile, the light source processor 730 may vary a amplitude of the switching control signal SG based on a magnitude of the drain terminal voltage VD of each of the plurality of switching elements Sa1 to Sa6.

Hereinafter, the display 180 may be named as the LCD display 180.

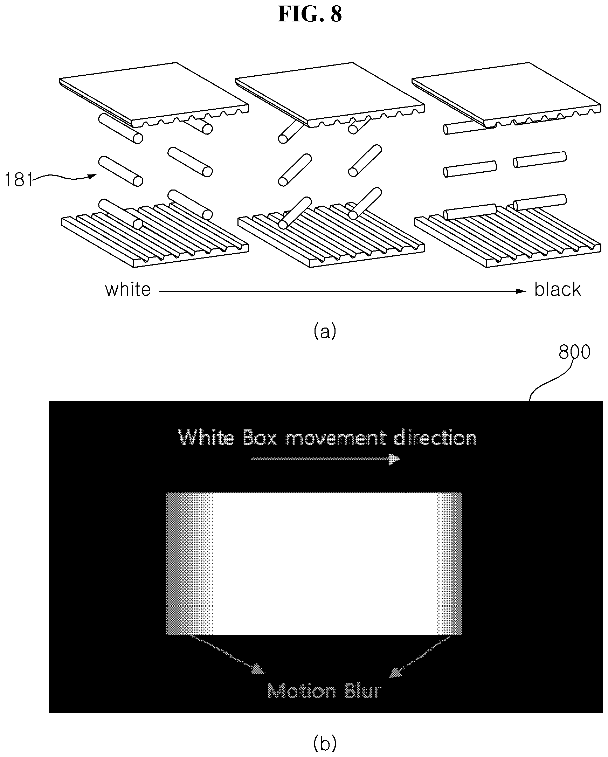

FIGS. 8 to 10 are diagrams illustrating the process by which a red afterimage is generated when KSF phosphor is applied to an LED used as a light source of a backlight.

The red afterimage may be generated by the response speed of the liquid crystal of the LCD display 180, the duty of the PWM signal, and the excitation of red luminance due to the KSF phosphor.

FIGS. 8 to 10, it is assumed that a white box (or white box image) is moved from left to right over an entire area 800 of the display 180.

That is, in FIGS. 8 to 10, a image may be playing.

FIG. 8 shows that when the white box moves from left to right, a motion blur occurs due to the response speed of the liquid crystal included in the display 180.

Referring to (a) of FIG. 8, it shows a change in the liquid crystal 181 due to a change in luminance when the white box moves from left to right. Referring to (b) of FIG. 8, it shows that when the white box moves from left to right, the response speed of the liquid crystal is delayed and the motion blur occurs.

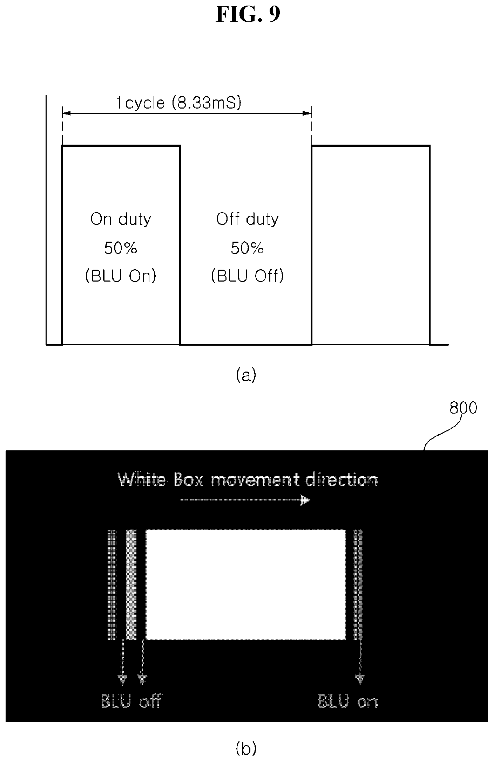

In (a) of FIG. 9 shows the waveform of a PWM signal 900 for driving the light source 252 of the backlight 250. When the driving frequency of the PWM signal 900 is 120 Hz, one cycle of the PWM signal 900 has a time period of 8.33ms.

When the duty of the PWM signal 900 is 50%, the on interval (On duty interval or BLU On interval) of the PWM signal 900 is 50% of 8.33ms, and the off interval (Off duty interval) of the PWM signal 900 is 50% of 8.33ms.

When the PWM signal 900 is turned on, the light source 252 of the backlight 250 emits light, and when the PWM signal 900 is turned off, the light source 252 of the backlight 250 does not emit light.

Referring to (b) of FIG. 9, when the duty of the PWM signal is 50% and the white box moves from left to right, it shows the effect of the response speed of the liquid crystal and the duty of the PWM signal 900. A gray image is displayed in the on interval of the PWM signal 900, and a black image is displayed in the off interval.

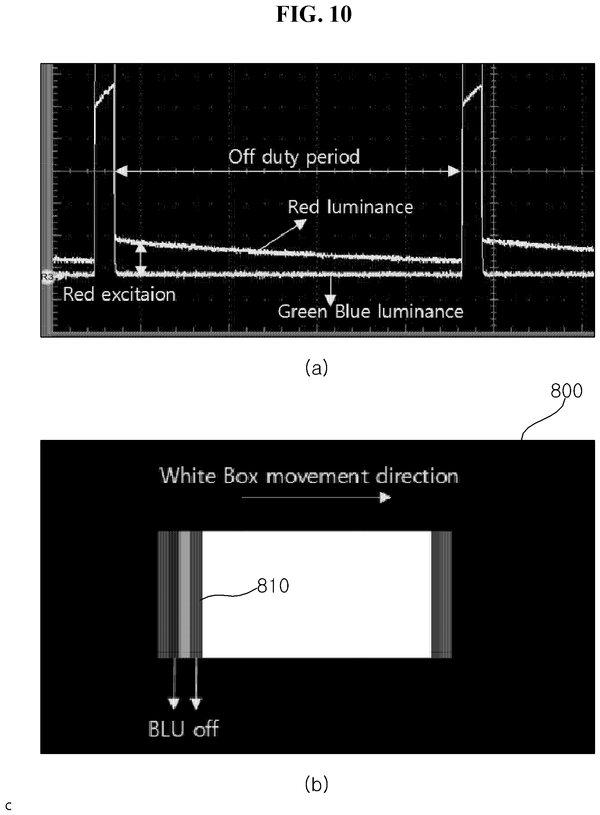

In (a) of FIG. 10 shows a red luminance waveform, a green luminance waveform, and a blue luminance waveform output by the pixel in the off interval of the PWM signal 900 when the duty of the PWM signal 900 is 50%.

In the off interval of the PWM signal 900, the red luminance waveform shows an excitation phenomenon compared to the green luminance waveform and the blue luminance waveform. In the off interval of the PWM signal 900, the red luminance gradually decreases compared to the luminance of other color. That is, the response speed to red decreases in the off interval of the PWM signal 900. This is due to the KSF phosphor used in the LED of the light source 252 due to its own characteristic of emitting red light.

For this reason, as shown in (b) of FIG. 10, when the white box moves, a problem occurs in which the red afterimage 810 appears in the off interval (BLU off interval) of the PWM signal 900 due to the response speed of the liquid crystal, the duty of the PWM signal, and the use of the KSF phosphor.

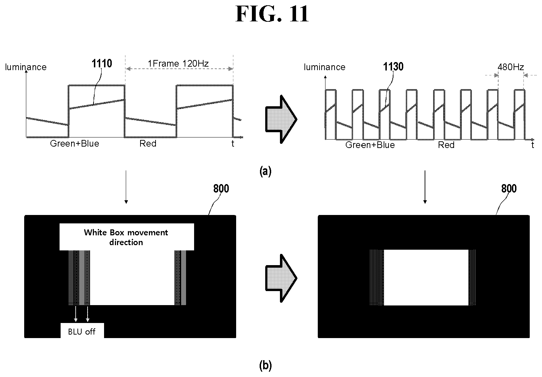

FIG. 11 is a diagram illustrating a method for improving the red afterimage that occurs when KSF phosphor is applied to an LED used as a backlight light source.

Referring to (a) of FIG. 11, it shows changes in the red luminance waveform, the green luminance waveform, and the blue luminance waveform as the driving frequency of the PWM signal is increased from 120Hz to 480Hz to improve the red afterimage.

When the driving frequency of the PWM signal is 120 Hz, a first waveform 1110 of red luminance is compared with a second waveform 1130 of red luminance when the driving frequency of the PWM signal is increased four times to 480 Hz. Referring to the second waveform 1130, as the off interval of the PWM signal decreases, the interval where red luminance is excited also decreases.

Accordingly, when the driving frequency of the PWM signal is increased, the off interval of the PWM signal is shortened, so that the red afterimage 810 may be improved, as shown in (b) of FIG. 11. That is, the off interval of the PWM signal is shortened, so the time for the red afterimage 810 to be recognized by the viewer's eyes may be reduced.

However, when the driving frequency of the PWM signal increases, there is a problem that the gray level expression of the image is reduced.

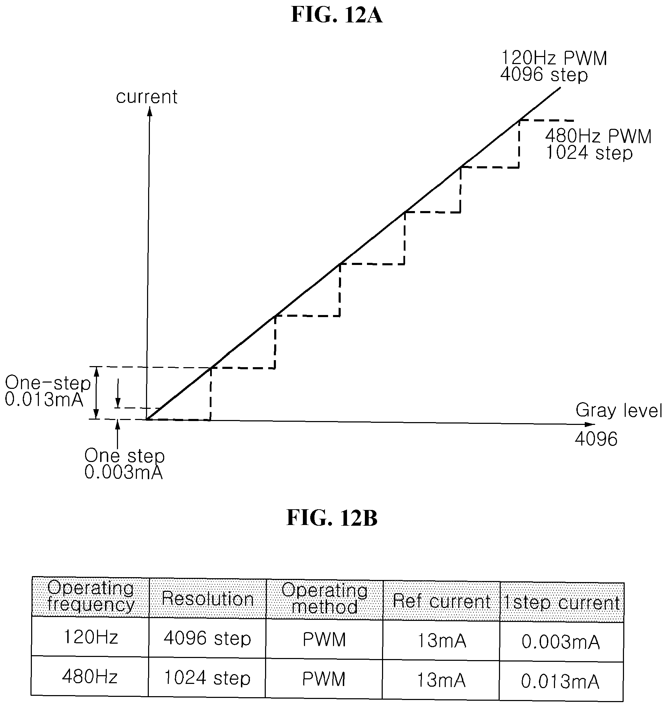

FIGS. 12A and 12B are diagrams illustrating that when the driving frequency of the PWM signal increases, the gray level expression of the image decreases.

Referring to FIG. 12A, a graph showing the relationship between gray level and current is shown.

A first graph 1210 may be a graph showing the relationship between gray level and current when the driving frequency of the PWM signal is 120 Hz.

A second graph 1230 may be a graph showing the relationship between gray level and current when the driving frequency of the PWM signal is 480 Hz.

FIG. 12B is a diagram comparing a gray level expression level, a driving method, a reference current, and a current corresponding to one gray level for cases where the driving frequency of the PWM signal is 120Hz and 480Hz, respectively.

If the driving frequency of the PWM signal is 120Hz, the gray level or gray level may be divided into 4096 levels and expressed. On the other hand, when the driving frequency of the PWM signal is 480Hz, the gray level may be divided into 1024 levels and expressed.

When the driving frequency of the PWM signal increases, the number of clock pulses of the light source driving circuit 256 that operates at a fixed clock speed within a shortened time period of one cycle may be reduced. This leads to a decrease in the number of bits, resulting in a decrease in gray level expression.

It is assumed that a reference current provided to the light source 252 or the backlight block of the backlight 250 is 13 mA. The reference current may also be referred to as a constant current.

If the driving frequency of the PWM signal is 120Hz, the gray level may be expressed in 4096 steps, and one step may correspond to a current of 0.003mA (13mA / 4096). That is, in order to increase one gray level, a current of 0.003 mA must be additionally applied to the light source 252.

If the driving frequency of the PWM signal is 480Hz, the gray level may be expressed in 1024 steps, and one step may correspond to a current of 0.013mA (13mA / 1024). That is, in order to increase one gray level, a current of 0.013mA must be additionally applied to the light source 252.

When the driving frequency of the PWM signal increases from 120Hz to 480Hz, 4 steps of gray level are expressed as 1 step of gray level. In other words, if the driving frequency of the PWM signal is increased by 4 times, the number of bits is reduced by 2 bits from 12 bits to 10 bits, and the gray level expression is reduced by 1/4 times.

As a result, whenever the driving frequency of the PWM signal is doubled, the number of bits is reduced by 1 bit, and gray level expression is reduced by 1/2.

As the gray level expression is reduced by 1/2, the resolution of the image may also be reduced by 1/2.

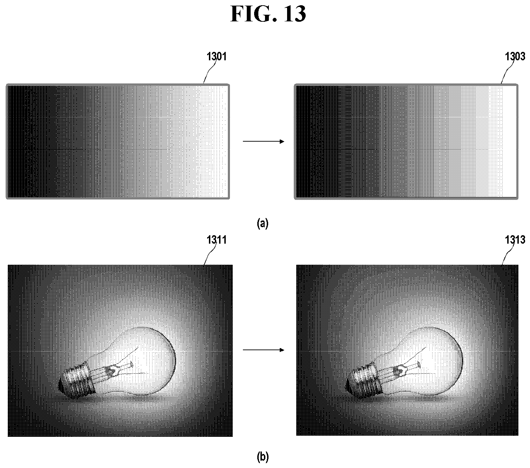

FIG. 13 is a diagram showing that when the driving frequency of the PWM signal increases from 120Hz to 480Hz, the resolution of the image decreases.

Referring to (a) of FIG. 13, a first test image 1301 is an image displayed on the screen when the driving frequency of the PWM signal is 120Hz, and a second test image 1303 is an image displayed on the screen when the driving frequency of the PWM signal is 480Hz.

The number of gray level steps corresponding to the first test image 1301 is 4096, and the number of gray level steps corresponding to the second test image 1303 is 1024. In other words, it may be seen that as the driving frequency of the PWM signal increases, the gray level expression also decreases, making the image unnatural.

Referring to (b) of FIG. 13, a first light bulb image 1311 is an image displayed on the screen when the driving frequency of the PWM signal is 120 Hz, and a second light bulb image 1313 is an image displayed on the screen when the driving frequency of the PWM signal is 480 Hz.

The number of gray level steps corresponding to the first light bulb image 1311 is 4096, and the number of gray level steps corresponding to the second light bulb image 1313 is 1024. In other words, it may be seen that as the driving frequency of the PWM signal increases, the gray level expression power also decreases, making the image unnatural.

In the following embodiment, even if a trade-off situation occurs in which gray level expression is reduced due to an increase in the driving frequency of the PWM signal, an attempt is made to solve the problem of reducing red afterimage that may worsen under BFI mode.

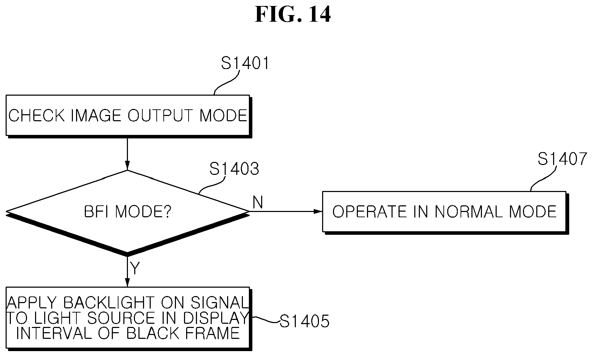

FIG. 14 is a flowchart explaining a method of operating a display device according to an embodiment of the present disclosure.

In one embodiment, the controller 170 may be the backlight dimming controller 510 of FIG. 4. In another embodiment, the backlight dimming controller 510 may be included in the controller 170.

Image output mode may include a normal mode and a black frame insertion (BFI) mode.

The BFI mode may be a mode that outputs an image by inserting black frame between image frames to prevent image blur. The BFI mode may be a mode mainly used to prevent blur when playing game image or sports image.

BFI mode may be a mode that improves text drag and image drag.

The normal mode may be a mode that outputs an image using image frames input from the outside. That is, the normal mode may be a mode in which an image is output using image frames input from the outside without inserting a black frame.

Referring to FIG. 14, the controller 170 may check the image output mode (S1401).

In one embodiment, the controller 170 may check the image output mode based on user input. The controller 170 may receive the user input for setting the image output mode through a menu.

In one embodiment, the controller 170 may receive a signal for setting an image output mode from the remote control device 200. The signal received from the remote control device 200 may be a voice signal corresponding to a voice command for setting the user's image output mode or an IR signal for selecting the image output mode.

The controller 170 may determine whether the image output mode is set to the normal mode or the BFI mode.

The normal mode and the BFI mode may be modes supported by the display device 100 in which KSF phosphor is applied to the LED of the light source 252 of the backlight 250.

If it is determined that the image output mode is the BFI mode (S1403), the controller 170 may apply a backlight on signal to the backlight block or the light source 252 in the display interval of the black frame (S1405).

The display interval of the black frame is an interval in which a black image is displayed on the liquid crystal display panel 210 and may be an interval in which the light source 252 of the backlight 250 is turned off. The display interval of the black frame may be referred to as the black frame insertion interval.

If it is determined that the image output mode is set to BFI mode, the controller 170 may turn on the light source 252 of the backlight 250 in the black frame display interval.

In one embodiment, when it is determined that the image output mode is set to the BFI mode, the controller 170 may slightly turn on the light source 252 of the backlight 250 in the display interval of the black frame.

If it is determined that the image output mode is set to the BFI mode, the controller 170 may apply a backlight on signal to the light source 252 to turn on the light source 252 during the display interval of the black frame.

The backlight on signal may be one of a PWM (Pulse Width Modulation) signal, a PAM (Pulse Amplitude Modulation) signal, or a PWAM (Pulse Width Amplitude Modulation) signal for controlling the blinking of the light source 252.

In one embodiment, when the controller 170 determines that the image output mode is set to the BFI mode, the controller 170 may apply one or more backlight on signals to the light source 252 during the display interval of the black frame.

A width of each of the one or more backlight on signals may have a unit duty. The unit duty may be smaller than the duty of the light source driving signal. The unit duty may have a very small value compared to the duty.

An amplitude of each of the one or more backlight on signals may be the same as an amplitude of the light source driving signal in the duty-on interval. However, there is no need to be limited to this, and the amplitude of each of one or more backlight on signals may be different from the amplitude of the light source driving signal in the duty-on interval.

The time intervals at which each of the one or more backlight on signals is applied may be the same or different from each other.

The controller 170 may apply a plurality of backlight on signals to the display interval of the black frame. The controller 170 may apply a plurality of backlight-on signals, in which one or more of the width, amplitude, or time interval applied between them adjusted, to the light source 252 during the display interval of the black frame.

If it is determined that the image output mode is not the BFI mode (S1403), the controller 170 may output the image in the normal mode (S1407).

In the normal mode, the light source 252 of the backlight 250 may be turned on or off depending on the duty of the light source driving signal.

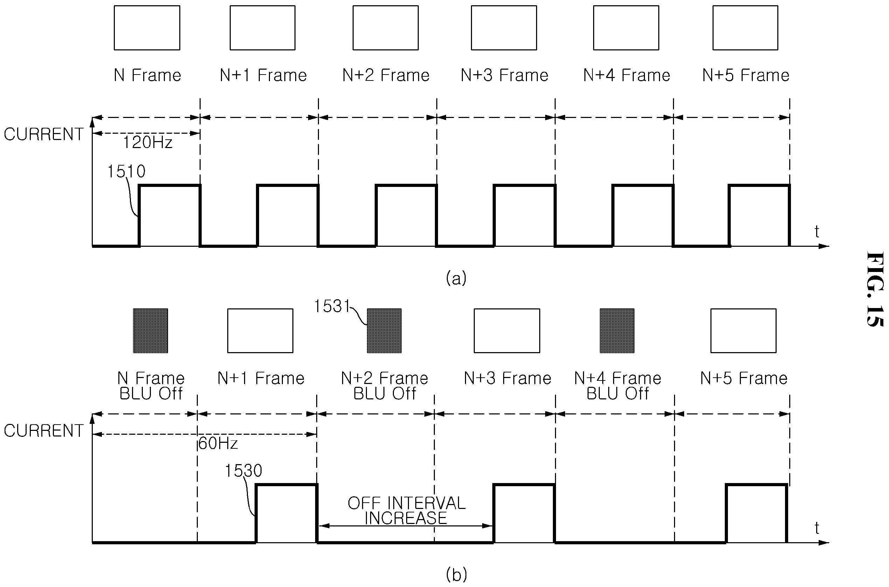

FIG. 15 is a diagram illustrating an example of a light source driving signal applied to a light source in each of normal mode and BFI mode according to the prior art.

In (a) of FIG. 15, a 120Hz light source driving signal 1510 with a 50% duty in the normal mode is shown, and in (b) of FIG. 15 a 60Hz light source driving signal with a 25% duty in the BFI mode is shown.

The 120Hz light source driving signal 1510 may be turned on during a duty-on interval of one cycle and may be turned off during a duty-off interval of one cycle. During the duty-on interval, the light source 252 may emit light, and during the duty-off interval, the light source 252 may be turned off.

The duty-on interval may be an interval in which the light source 252 is turned on, and the duty-off interval may be an interval in which the light source 252 is turned off.

When the image output mode is the BFI mode, the light source driving signal 1530 with 60Hz lower than 120Hz is applied to the light source due to the insertion of the black frame 1531 between image frames (N+1 frame and N+3 frame).

As the driving frequency of the light source driving signal decreases, the duty-off interval may increase. When the duty-off interval increases, red luminance excitation occurs due to the characteristic of LED using KSF phosphors, and a large red afterimage (or red afterglow) may occur.

In an embodiment of the present disclosure, an attempt is made to reduce red afterimage by applying one or more backlight on signals to the display interval of the black frame.

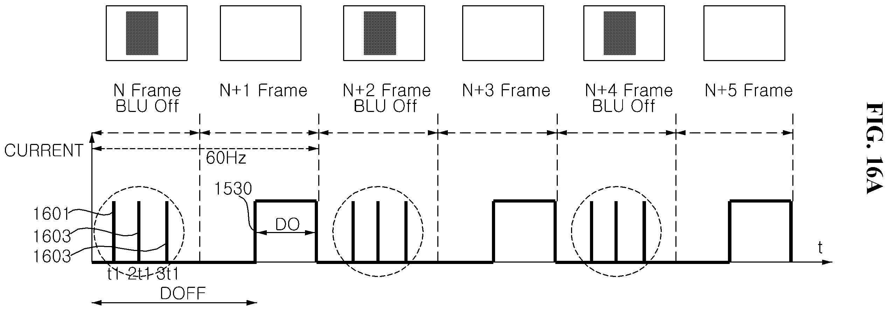

FIGS. 16A to 16C are diagrams illustrating the interval between backlight on signals applied to the duty-off interval of the light source driving signal when operating in BFI mode according to an embodiment of the present disclosure.

FIGS. 16A to 16C, it is assumed that the image output mode of the display device 100 is set to the BFI mode.

The light source driving signal 1530 may be turned off in the duty-off interval DOFF including the insertion interval of the black frame (N frame) and turned on in the backlight on interval DO in which the image frame (N+1 frame) is displayed. The duty-off interval DOFF may include at least a portion of the insertion interval of the black frame (N frame) and the display interval of the image frame (N+1 frame).

The duty-off interval DOFF has become longer than before due to the insertion of a black frame N frame. As the duty-off interval DOFF becomes longer, there is a problem in that a red afterimage remains due to the excitation of the red luminance of the light source 252 using the KSF phosphor.

To solve this problem, the controller 170 may apply a plurality of backlight on signals to the light source 252 in the duty-off interval DOFF under the BFI mode. Under the BFI mode, the controller 170 may control the light source driving circuit 256 to apply a plurality of backlight on signals to the light source 252 during the duty-off interval DOFF.

The width (or unit duty) of each of the plurality of backlight on signals may be smaller than the duty of the light source driving signal 1530. The width of each of the plurality of backlight on signals may be unit duty, and the unit duty may be 1/50 of the duty of the light source driving signal 1530, but this is only an example.

The width and amplitude of each of the plurality of backlight on signals may be the same.

As shown in FIG. 16A, the intervals at which each of the first to third backlight on signals 1601, 1603, and 1605 with unit duty are applied to the light source 252 may be the same.

As another example, the time intervals at which each of the plurality of backlight on signals is applied to the light source 252 may be different.

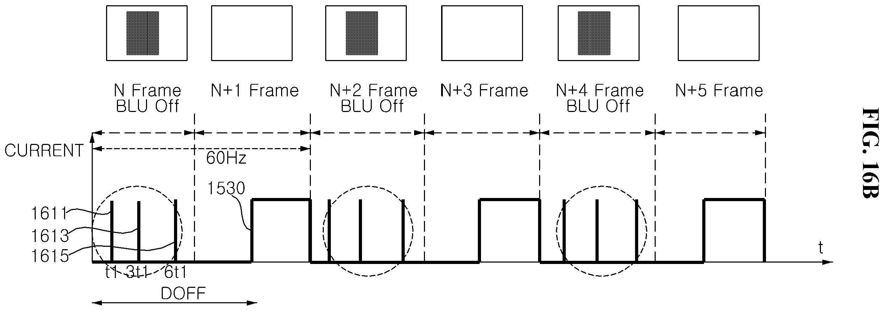

Referring to FIG. 16B, the interval at which each of the plurality of backlight on signals 1611, 1613, and 1615 having the same amplitude and unit duty is applied to the light source 252 may be gradually increased. For example, the fourth backlight on signal 1611 may be applied to the light source 252 at time t1 of the duty-off interval DOFF, the fifth backlight on signal 1613 may be applied to the light source 252 at time 3t1 of the duty-off interval DOFF, and the sixth backlight on signal 1615 may be applied to light source 252 at time 6t1 of the duty-off interval DOFF.

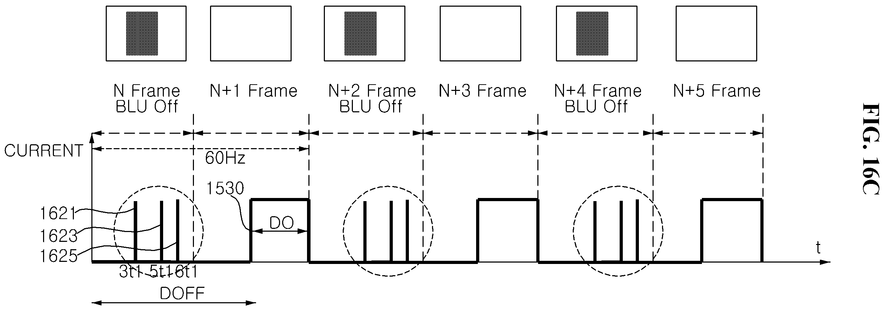

Referring to FIG. 16C, the interval at which each of the plurality of backlight on signals 1621, 1623, and 1625 with unit duty is applied to the light source 252 may be gradually reduced. For example, the 7th backlight on signal 1621 may be applied to the light source 252 at 3t1 of the duty-off interval DOFF, the 8th backlight on signal 1623 may be applied to the light source 252 at 5t1 of the duty-off interval DOFF, and the 9th backlight on signal 1625 may be applied to the light source 252 at time 6t1 of the duty-off interval DOFF.

In this way, when the backlight on signal is applied to the duty-off interval DOFF, the duty-off interval DOFF is shortened. As the duty-off interval DOFF becomes shorter, the red afterimage caused by the use of KSF phosphor may be reduced.

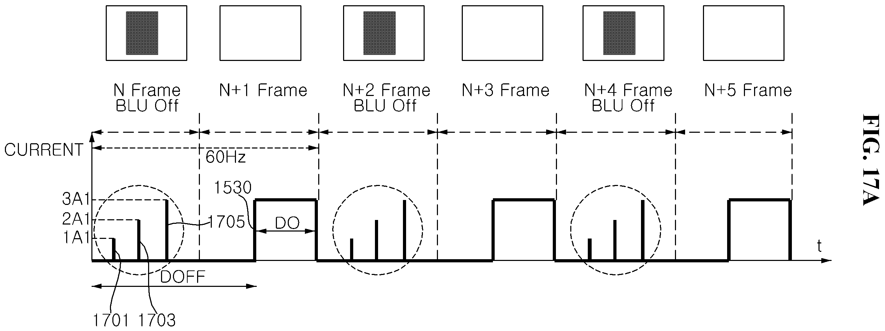

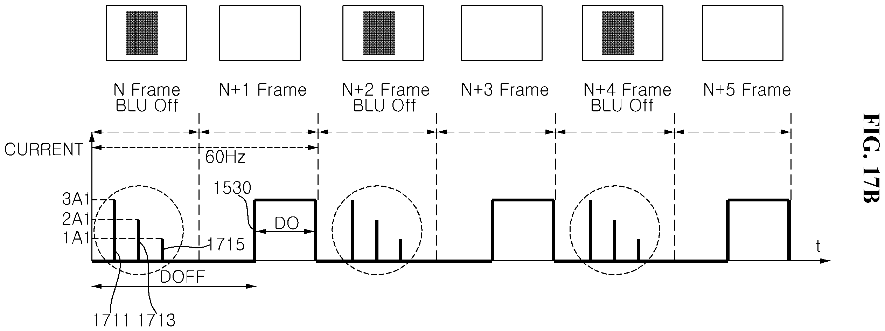

FIGS. 17A and 17B are diagrams illustrating the amplitude of the backlight on signal applied to the duty-off interval of the light source driving signal when operating in the BFI mode according to an embodiment of the present disclosure.

FIGS. 17A and 17B, it is assumed that the image output mode of the display device 100 is set to the BFI mode.

The light source driving signal 1530 may be turned off in the duty-off interval DOFF including the insertion interval of the black frame (N frame) and turned on in the backlight on interval DO in which the image frame (N+1 frame) is displayed. The duty-off interval DOFF may include at least a portion of the insertion interval of the black frame (N frame) and the display interval of the image frame (N+1 frame).

Under the BFI mode, the controller 170 may apply a plurality of backlight on signals with different amplitude and unit duty to the light source 252 in the duty-off interval DOFF.

The controller 170 may control the light source driving circuit 256 to apply a plurality of backlight on signals 1701, 1703, and 1705 whose amplitudes are sequentially increased in the duty-off interval DOFF to the light source 252.

Referring to FIG. 17A, the amplitude of each of the plurality of backlight on signals 1701, 1703, and 1705 with the unit duty may gradually increase.

For example, the amplitude of the first backlight on signal 1701 may be A1, the amplitude of the second backlight on signal 1703 may be 2A1, and the amplitude of the third backlight on signal 1705 may be 3A1.

The controller 170 may control the light source driving circuit 256 to apply a plurality of backlight on signals 1711, 1713, and 1715 whose amplitudes are sequentially reduced in the duty-off interval DOFF to the light source 252.

As shown in FIG. 17B, the amplitude of each of the plurality of backlight on signals 1711, 1713, and 1715 with unit duty may gradually decrease.

For example, the amplitude of the fourth backlight on signal 1711 may be 3A1, the amplitude of the fifth backlight on signal 1713 may be 2A1, and the amplitude of the sixth backlight on signal 1715 may be A1.

As such, according to an embodiment of the present disclosure, when the backlight on signal is applied to the duty-off interval DOFF, the duty-off interval DOFF has the effect of being shortened. As the duty-off interval DOFF becomes shorter, the red afterimage caused by the use of KSF phosphor may be reduced.

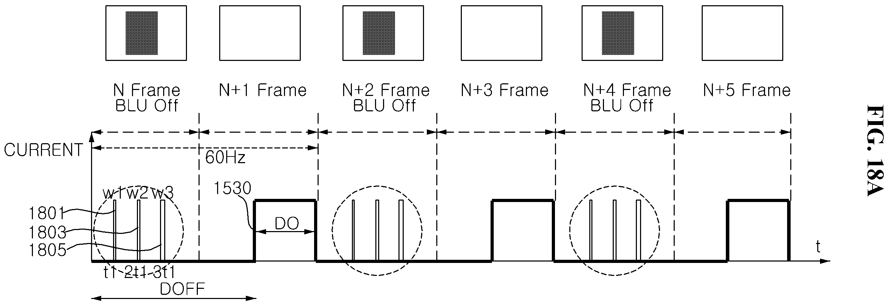

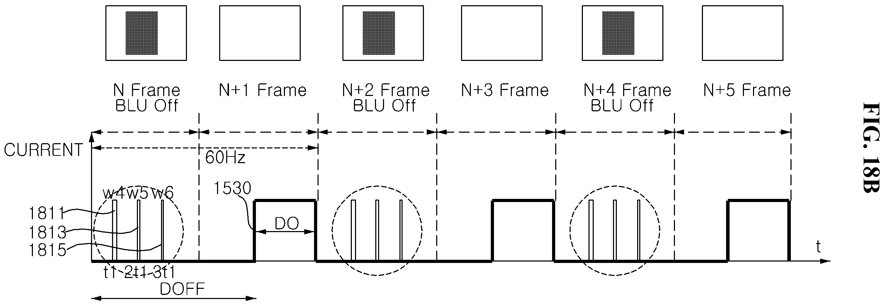

FIGS. 18A and 18B are diagrams illustrating the duty of a backlight on signal applied to the duty-off interval of the light source driving signal when operating in BFI mode according to an embodiment of the present disclosure.

In FIGS. 18A and 18B, it is assumed that the image output mode of the display device 100 is set to the BFI mode.

The light source driving signal 1530 may be turned off in the duty-off interval DOFF including the insertion interval of the black frame (N frame) and turned on in the backlight on interval DO in which the image frame (N+1 frame) is displayed. The duty-off interval DOFF may include at least a portion of the insertion interval of the black frame (N frame) and the display interval of the image frame (N+1 frame).

In the BFI mode, the controller 170 may apply a plurality of backlight on signals having the same amplitude and different duty to the light source 252 during the duty-off interval DOFF.

In the BFI mode, the controller 170 may control the light source driving circuit 256 so that a plurality of backlight on signals having the same amplitude and different duty are applied to the light source 252 in the duty-off interval DOFF.

The controller 170 may control the light source driving circuit 256 so that a plurality of backlight on signals 1801, 1803, and 1805 whose duties sequentially increase are applied to the light source 252.

Referring to FIG. 18A, the duty of each of the plurality of backlight on signals 1801, 1803, and 1805 may be gradually increased.

For example, the duty (or width) of the first backlight on signal 1801 may be w1, the width of the second backlight on signal 1803 may be w2, which is greater than w1, and the width of the third backlight on signal 1805 may be w3, which is larger than w2. w1 may be unit duty, w2 may be twice w1, and w3 may be three times w1.

The controller 170 may control the light source driving circuit 256 so that a plurality of backlight on signals 1811, 1813, and 1815 whose duties are sequentially decreased are applied to the light source 252.

Referring to FIG. 18B, the duty of each of the plurality of backlight on signals 1811, 1813, and 1815 may be gradually increased.

For example, the duty (or width) of the fourth backlight on signal 1811 may be w4, the width of the fifth backlight on signal 1813 may be w5, which is w smaller than w4, and the width of the sixth backlight on signal 1815 may be may be w6, which is smaller than w5. w6 may be unit duty, w5 may be twice w6, and w4 may be three times w6.

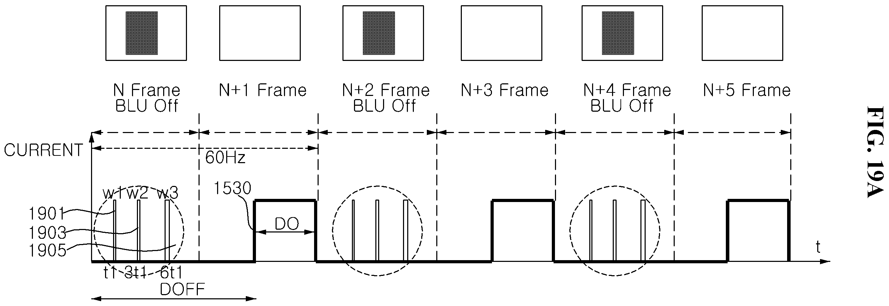

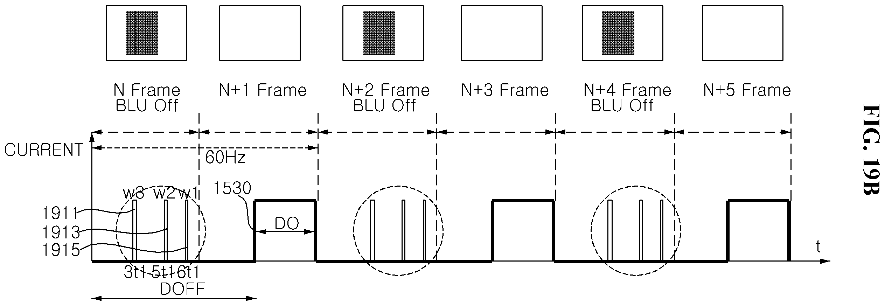

FIGS. 19A and 19B are diagrams illustrating the duty and interval of the backlight on signal applied to the duty-off interval of the light source driving signal when operating in BFI mode according to an embodiment of the present disclosure.

In FIGS. 19A and 19B, it is assumed that the image output mode of the display device 100 is set to BFI mode.

In the BFI mode, the controller 170 may apply a plurality of backlight on signals having the same amplitude and different duty to the light source 252 in the duty-off interval DOFF. The time interval at which each of the plurality of backlight on signals is applied to the light source 252 may be different.

Referring to FIG. 19A, the interval at which each of the plurality of backlight on signals 1901, 1903, and 1905 having different duty are applied to the light source 252 may be gradually increased. For example, the first backlight on signal 1901 having the first duty w1 may be applied to the light source 252 at time t1 of the duty-off interval DOFF.

The second backlight on signal 1903 having a second duty w2 greater than the first duty w1 may be applied to the light source 252 at time 3t1 of the duty-off interval DOFF.

The third backlight on signal 1905 having a third duty w3 greater than the second duty w2 may be applied to the light source 252 at time 6t1 of the duty-off interval DOFF.

Referring to FIG. 19B, the interval at which each of the plurality of backlight on signals 1911, 1913, and 1915 having different duty are applied to the light source 252 may be gradually reduced. For example, the fourth backlight on signal 1911 having the third duty w3 may be applied to the light source 252 at time 3t1 of the duty-off interval DOFF.

The fifth backlight on signal 1913 having a second duty w2 smaller than the third duty w2 may be applied to the light source 252 at time 5t1 of the duty-off interval DOFF.

The sixth backlight on signal 1915 having a first duty w1 smaller than the second duty w2 may be applied to the light source 252 at time 6t1 of the duty-off interval DOFF.

As such, according to an embodiment of the present disclosure, backlight-on signals with different duty are applied at different time interval, resulting in the effect of shortening the duty-off interval DOFF. As the duty-off interval DOFF becomes shorter, the red afterimage caused by the use of KSF phosphor may be reduced.

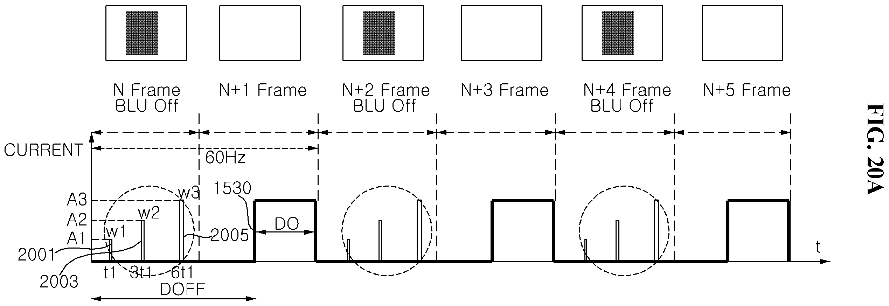

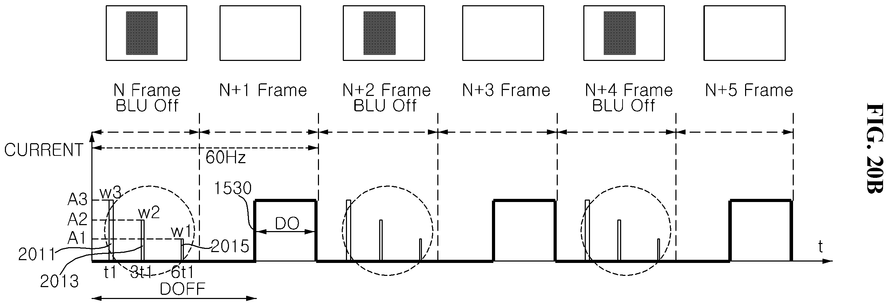

FIGS. 20A and 20B are diagrams illustrating the duty, amplitude, and interval of the backlight on signal applied to the duty-off interval of the light source driving signal according to an embodiment of the present disclosure.

Under the BFI mode, the controller 170 may apply each of a plurality of backlight on signals having different amplitude and different duty to the light source 252 at different time interval in the duty-off interval DOFF. That is, the time interval at which each of the plurality of backlight on signals is applied to the light source 252 may be different.

Referring to FIG. 20A, the interval at which each of the plurality of backlight on signals 2001, 2003, and 2005 having different amplitude and different duty are applied to the light source 252 may be gradually increased. For example, the first backlight on signal 2001 having the first amplitude A1 and the first duty w1 may be applied to the light source 252 at time t1 of the duty-off interval DOFF.

The second backlight on signal 2003, which has a second amplitude A2 greater than the first amplitude A1 and a second duty w2 greater than the first duty w1, may be applied to the light source 252 at time 3t1 of the duty-off interval DOFF.

The third backlight on signal 2005, which has a third amplitude A3 greater than the second amplitude A2 and a third duty w3 greater than the second duty w2, may be applied to the light source 252 at time 6t1 of the duty-off interval DOFF.

Referring to FIG. 20B, the interval at which each of the plurality of backlight on signals 2011, 2013, and 2015 having different amplitude and different duty are applied to the light source 252 may be gradually reduced. For example, the fourth backlight on signal 2011 having the third amplitude A3 and the third duty w3 may be applied to the light source 252 at time t1 of the duty-off interval DOFF.

The fifth backlight on signal 2013, which has a second amplitude A2 smaller than the third amplitude A3 and a second duty w2 smaller than the third duty w3, may be applied to the light source 252 at time 3t1 of the duty-off interval DOFF.

The sixth backlight on signal 2015, which has a first amplitude A1 smaller than the second amplitude A2 and a first duty w1 smaller than the second duty w2, may be applied to the light source 252 at time 6t1 of the duty-off interval DOFF.

As such, according to an embodiment of the present disclosure, backlight-on signals with different amplitude and different duty are applied to the duty-off interval DOFF at different time intervals, resulting in the effect of shortening the duty-off interval DOFF. As the duty-off interval DOFF becomes shorter, the red afterimage caused by the use of KSF phosphor may be reduced.

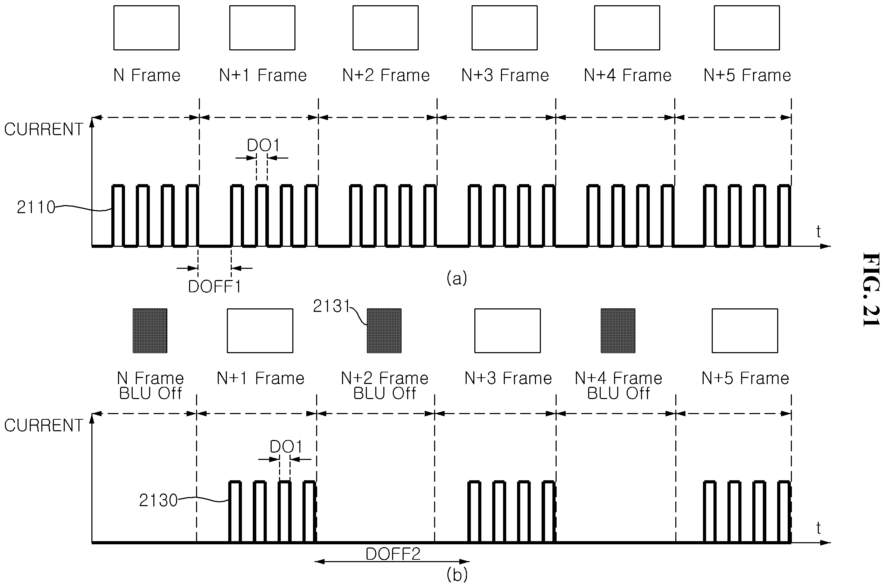

FIG. 21 is a diagram explaining the light source driving signal applied to the light source in each of the normal mode and BFI mode when the frequency of the light source driving signal is increased.

Referring to (a) of FIG. 21, the image output mode is the normal mode, and the driving frequency of the light source driving signal is 480 Hz, which is increased by 4 times compared to (a) of FIG. 15.

Referring to (b) of FIG. 21, the image output mode is the BFI mode, and the driving frequency of the light source driving signal is increased to 240 Hz, which is four times higher than that of (b) in FIG. 15. In the BFI mode, the frequency of the light source driving signal may be reduced due to the insertion of a black frame.

When the image output mode is BFI mode, the light source driving signal 2130 with a frequency of 240Hz lower than 480Hz may be applied to the light source due to the insertion of the black frame 2131 between image frames (N+1 frame and N+3 frame).

As a result, the duty-off interval of the light source driving signal 2130 may increase from DOFF1 to DOFF2. Even if the driving frequency of the light source driving signal is increased, if the duty-off interval is increased due to the BFI mode, the effect of reducing the red afterimage may fade.

In an embodiment of the present disclosure, an attempt is made to reduce red afterimage by applying one or more backlight on signals to the duty-off interval while the frequency of the light source driving signal is increased.

Hereinafter, when the driving frequency of the light source driving signal is increased, backlight on signals may be applied to the light source according to the increased driving frequency.

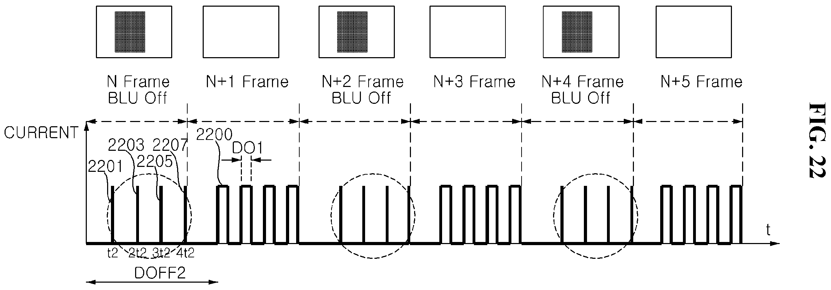

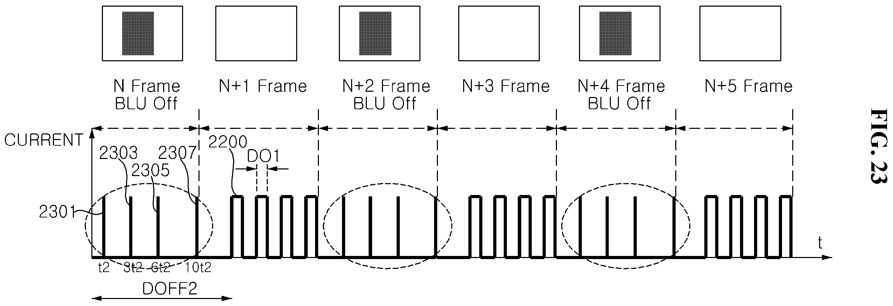

FIGS. 22 and 23 are diagrams illustrating the interval between backlight on signals applied to the duty-off interval of the light source driving signal in BFI mode when the driving frequency of the light source driving signal is increased according to an embodiment of the present disclosure.

FIGS. 22 and 23, it is assumed that the image output mode of the display device 100 is set to the BFI mode.

The light source driving signal 2200 may be turned off in the duty-off interval DOFF2 including the insertion interval of the black frame (N frame) and turned on in the backlight on interval DO1 where the image frame (N+1 frame) is displayed. The duty-off interval DOFF2 may include at least a portion of the insertion interval of the black frame (N frame) and the display interval of the image frame (N+1 frame).

Referring to FIG. 22, the controller 170 may apply a plurality of backlight on signals 2201, 2203, 2205, and 2207 to the light source 252 in the duty-off interval DOFF2 under BFI mode. The controller 170 may control the light source driving circuit 256 to apply a plurality of backlight on signals 2201, 2203, 2205, and 2207 to the light source 252 in the duty-off interval DOFF2 under the BFI mode.

The width of each of the plurality of backlight on signals 2201, 2203, 2205, and 2207 may be smaller than the duty of the light source driving signal 2200. The width of each of the plurality of backlight on signals 2201, 2203, 2205, and 2207 may be a unit duty, and the unit duty may be 1/50 of the duty of the light source driving signal 2200, but this is only an example.

The width and amplitude of each of the plurality of backlight on signals 2201, 2203, 2205, and 2207 may be the same. Additionally, the interval at which each of the plurality of backlight on signals 2201, 2203, 2205, and 2207 with unit duty are applied to the light source 252 may be the same.

As another example, the interval at which each of the plurality of backlight on signals is applied to the light source 252 may be different.

Referring to FIG. 23, the interval at which each of the plurality of backlight on signals 2301, 2303, 2305, and 2307 having the same amplitude and unit duty is applied to the light source 252 may be gradually increased. For example, the first backlight on signal 2301 may be applied to the light source 252 at time t2 of the duty-off interval DOFF2, the second backlight on signal 2303 may be applied to the light source 252 at time 3t2 of the duty-off interval DOFF2, and the third backlight on signal 2305 may be applied to the light source 252 at 6t2 of the duty-off interval DOFF2, and the fourth backlight on signal 2307 may be applied to the light source 252 at 10t2 of the duty-off interval DOFF2.

As another example, the interval at which each of the plurality of backlight on signals 2301, 2303, 2305, and 2307 having the same amplitude and unit duty is applied to the light source 252 may be gradually reduced.

In this way, when the backlight on signal is applied to the duty-off interval DOFF2, the duty-off interval DOFF2 is shortened. The duty-off interval DOFF2 is shortened, and as the light source driving frequency increases, the red afterimage caused by the use of KSF phosphor may be effectively reduced.

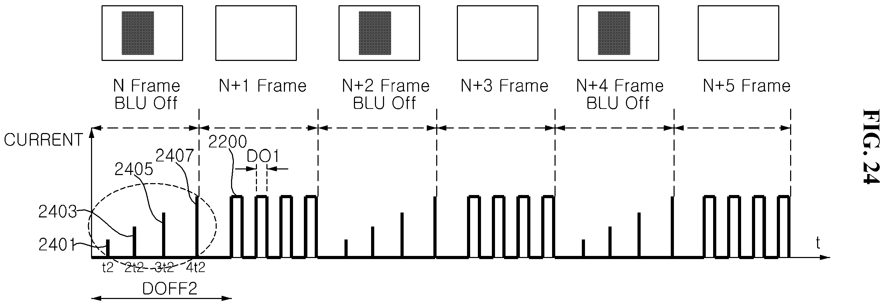

FIG. 24 is a diagram illustrating the amplitude between backlight on signals applied to the duty-off interval of the light source driving signal in BFI mode when the driving frequency of the light source driving signal is increased according to an embodiment of the present disclosure.

In FIG. 24, it is assumed that the image output mode of the display device 100 is set to the BFI mode.

In the BFI mode, the controller 170 may apply a plurality of backlight on signals 2401, 2403, 2405, and 2407 with different amplitude and unit duty to the light source 252 in the duty-off interval DOFF2.

The controller 170 may apply a plurality of backlight on signals 2401, 2403, 2405, and 2407 with unit duty and gradually increasing amplitude to the light source 252.

In this way, when the backlight on signal is applied to the duty-off interval DOFF2, the duty-off interval DOFF2 is shortened. The duty-off interval DOFF2 is shortened, and as the light source driving frequency increases, the red afterimage caused by the use of KSF phosphor may be effectively reduced.

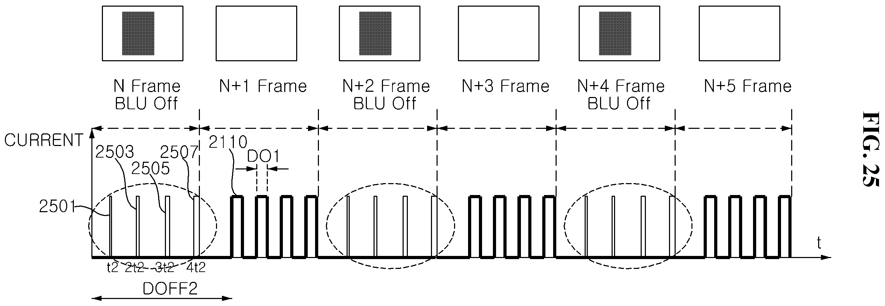

FIG. 25 is a diagram illustrating the duty between backlight on signals applied to the duty-off interval of the light source driving signal in BFI mode when the driving frequency of the light source driving signal is increased according to an embodiment of the present disclosure.

In FIG. 25, it is assumed that the image output mode of the display device 100 is set to the BFI mode.

In the BFI mode, the controller 170 may apply a plurality of backlight on signals 2501, 2503, 2505, and 2507 with the same amplitude and different duty to the light source 252 in the duty-off interval DOFF2. The interval between the plurality of backlight on signals 2501, 2503, 2505, and 2507 may be the same.

In one embodiment, the controller 170 may control the light source driving circuit 256 so that a plurality of backlight on signals 2501, 2503, 2505, and 2507 whose duties are sequentially increase are applied to the light source 252.

In another embodiment, the controller 170 may control the light source driving circuit 256 so that a plurality of backlight-on signals whose duties are sequentially decreased are applied to the light source 252.

In this way, when the backlight on signal is applied to the duty-off interval DOFF2, the duty-off interval DOFF2 is shortened. The duty-off interval DOFF2 is shortened, and as the light source driving frequency increases, the red afterimage caused by the use of KSF phosphor may be effectively reduced.

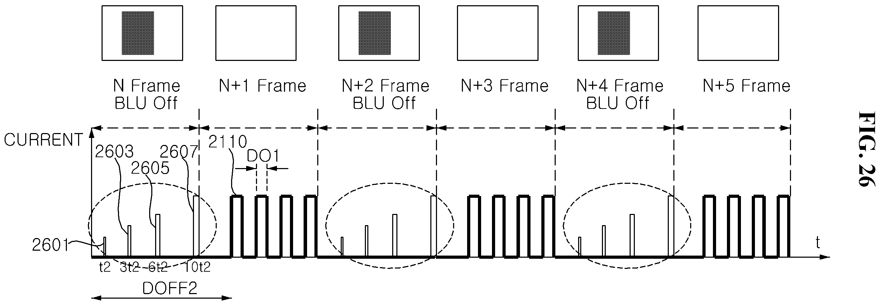

FIG. 26 is a diagram illustrating the duty, amplitude, and interval of the backlight on signal applied to the duty-off interval of the light source driving signal under BFI mode when the driving frequency of the light source driving signal is increased according to an embodiment of the present disclosure.

Under the BFI mode, the controller 170 may transmit each of a plurality of backlight on signals 2601, 2603, 2605, and 2607 having different amplitude and different duty at different time intervals of the duty-off interval DOFF2 to the light source 252. That is, the time intervals at which each of the plurality of backlight on signals 2601, 2603, 2605, and 2607 having different amplitude and different duty are applied to the light source 252 may be different.

The controller 170 may apply a plurality of backlight on signals 2601, 2603, 2605, and 2607 with gradually increased amplitude to the light source 252 in the duty-off interval DOFF2 of the BFI mode.

In this way, when the backlight on signal is applied to the duty-off interval DOFF2, the duty-off interval DOFF2 is shortened. The duty-off interval DOFF2 is shortened, and as the light source driving frequency increases, the red afterimage caused by the use of KSF phosphor may be effectively reduced.

In an embodiment of the present disclosure, the interval where the backlight on signal is applied may be the insertion interval of the black frame within the duty-off interval.

Applicability of the embodiment of the present disclosure may be determined by measuring a current input to the light source 252 during the black frame insertion interval under the BFI mode to check whether the backlight on signal is applied to the black frame insertion interval. Under the BFI mode, when it is detected that the current is input to the light source 252 in the black frame insertion interval, it may be determined that the embodiment of the present disclosure has been applied.

Applicability of the present disclosure may be determined by sensing light output from the screen of the display 180 during the black frame insertion interval under the BFI mode. Under the BFI mode, if the value of the current measured through the photo diode sensor during the black frame insertion interval is above a certain value, it may be determined that the embodiment of the present disclosure has been applied.

A display device 100 according to an embodiment of the present disclosure may comprise a liquid crystal display panel 210; a plurality of backlight blocks configured to output a light to the liquid crystal display panel, wherein each backlight block includes one or more light sources and each light source 252 is formed of KSF (Kalium Silicon Floride) phosphor; a light source driving circuit 256 configured to generate a light source driving signal with a duty for controlling light output of each backlight block; and a controller 170, 510 configured to determine whether the display device is operating in an image output mode that inserts a black frame between image frames, and control the light source driving circuit to apply one or more backlight on signals to the light source in the insertion interval of the black frame when operating in the image output mode.

The one or more backlight on signals may have a unit duty and the unit duty may be smaller than the duty of the light source driving signal.

The controller 170 may control the light source driving circuit to apply a plurality of backlight on signals to the light source in the insertion interval of the black frame, and the time intervals at which the plurality of backlight on signals are applied to the light source may be the same each other.

The controller 170 may control the light source driving circuit 256 to apply a plurality of backlight on signals to the light source in the insertion interval of the black frame, and the time intervals at which the plurality of backlight on signals are applied to the light source may be different from each other.

The time intervals between the plurality of backlight on signals may gradually increase or decrease.

The controller 170 may control the light source driving circuit 256 to apply a plurality of backlight on signals to the light source in the insertion interval of the black frame, and duties of the plurality of backlight on signals may be the same as each other.

The controller 170 may control the light source driving circuit to apply a plurality of backlight on signals to the light source in the insertion interval of the black frame, and duties of the plurality of backlight on signals may be different from each other.

Duties of the plurality of backlight on signals may sequentially increase or decrease.

The controller 170 may control the light source driving circuit 256 to apply a plurality of backlight on signals to the light source in the insertion interval of the black frame, and amplitudes of the plurality of backlight on signals may be the same each other.

The controller 170 may control the light source driving circuit 256 to apply a plurality of backlight on signals to the light source in the insertion interval of the black frame, and amplitudes of the plurality of backlight on signals may be different from each other.

Amplitudes of the plurality of backlight on signals may sequentially increase or decrease.

The amplitudes of the plurality of backlight on signals may be the same each other, the duties of the plurality of backlight on signals may be the same or different from each other.

The amplitudes of the plurality of backlight on signals may be different from each other, and duties of the plurality of backlight on signals may be the same each other or different from each other.

The controller 170 may control the light source driving circuit 256 to apply a plurality of backlight on signals to the light source according to increased driving frequency when a driving frequency of the light source driving signal is increased.

The present disclosure described above may be implemented as computer-readable code on a program-recorded medium. Computer-readable media includes all types of recording devices that store data that may be read by a computer system. Examples of computer-readable media include HDD (Hard Disk Drive), SSD (Solid State Disk), SDD (Silicon Disk Drive), ROM, RAM, CD-ROM, magnetic tape, floppy disk, and optical data storage devices. Additionally, the computer may include the controller 170 of the display device 100. Accordingly, the above detailed description should not be construed as restrictive in all respects and should be considered illustrative.

## Claims

1. A display device (100), comprising:
a liquid crystal display panel (210);
a plurality of backlight blocks configured to output a light to the liquid crystal display panel, wherein each backlight block includes one or more light sources and each light source (252) is formed of KSF (Kalium Silicon Floride) phosphor;
a light source driving circuit (256) configured to generate a light source driving signal with a duty for controlling light output of each backlight block; and
a controller (170, 510) configured to:
determine whether the display device is operating in an image output mode that inserts a black frame between image frames,
**characterized in that** the controller (170, 510) is further configured to:
control the light source driving circuit to apply one or more backlight on signals to the light source in the insertion interval of the black frame when operating in the image output mode.

2. The display device of claim 1, wherein the one or more backlight on signals have a unit duty and the unit duty is smaller than the duty of the light source driving signal.

3. The display device of claim 1, or 2, wherein the controller (170, 510) is configured to control the light source driving circuit to apply a plurality of backlight on signals to the light source in the insertion interval of the black frame, and the time intervals at which the plurality of backlight on signals are applied to the light source are the same each other.

4. The display device of claim 1, 2, or 3, wherein the controller (170, 510) is configured to control the light source driving circuit to apply a plurality of backlight on signals to the light source in the insertion interval of the black frame, and the time intervals at which the plurality of backlight on signals are applied to the light source are different from each other.

5. The display device of claim 4, wherein the time intervals between the plurality of backlight on signals gradually increase or decrease.

6. The display device of any one of claims 1 to 5, wherein the controller (170, 510) is configured to control the light source driving circuit to apply a plurality of backlight on signals to the light source in the insertion interval of the black frame, and duties of the plurality of backlight on signals are the same as each other.

7. The display device of any one of claims 1 to 6, wherein the controller (170, 510) is configured to control the light source driving circuit to apply a plurality of backlight on signals to the light source in the insertion interval of the black frame, and duties of the plurality of backlight on signals are different from each other.

8. The display device of claim 7, wherein duties of the plurality of backlight on signals sequentially increases or decreases.

9. The display device of any one of claims 1 to 8, wherein the controller (170, 510) is configured to control the light source driving circuit to apply a plurality of backlight on signals to the light source in the insertion interval of the black frame, and amplitudes of the plurality of backlight on signals are the same each other.

10. The display device of any one of claims 1 to 9, wherein the controller (170, 510) is configured to control the light source driving circuit to apply a plurality of backlight on signals to the light source in the insertion interval of the black frame, and amplitudes of the plurality of backlight on signals are different from each other.

11. The display device of claim 10, wherein amplitudes of the plurality of backlight on signals sequentially increase or decrease.

12. The display device of any one of claims 3 to 11, wherein amplitudes of the plurality of backlight on signals are the same each other, and duties of the plurality of backlight on signals are the same or different from each other.

13. The display device of any one of claims 3 to 12, wherein the amplitudes of the plurality of backlight on signals are different from each other, and duties of the plurality of backlight on signals are the same each other or different from each other.

14. The display device of any one of claims 1 to 13, wherein the controller (170, 510) is configured to control the light source driving circuit to apply a plurality of backlight on signals to the light source according to increased driving frequency when a driving frequency of the light source driving signal is increased.

15. A method of operating a display device (100), wherein the display device comprises a liquid crystal display panel (210), a plurality of backlight blocks configured to output a light to the liquid crystal display panel, wherein each backlight block includes one or more light sources and each light source (252) is formed of KSF (Kalium Silicon Floride) phosphor, a light source driving circuit (256) configured to generate a light source driving signal with a duty for controlling light output of each backlight block,
wherein the method comprises:
determining whether the display device is operating in an image output mode that inserts a black frame between image frames; and
controlling the light source driving circuit to apply one or more backlight on signals to the light source in the insertion interval of the black frame when operating in the image output mode.

## Amended claims

### Amended claims in accordance with Rule 137(2) EPC.

1. A display device (100), comprising:
a liquid crystal display panel (210);
a plurality of backlight blocks configured to output a light to the liquid crystal display panel, wherein each backlight block includes a plurality of light sources and each light source (252) is formed of KSF, Potassium fluorosilicate, phosphor;
a light source driving circuit (256) configured to generate a light source driving signal with a duty for controlling light output of each backlight block, wherein the light source driving signal is applied to the plurality of light source of each backlight block in a display interval of an image frame; and
a controller (170, 510) configured to:
determine whether the display device is operating in an image output mode that inserts a black frame between image frames,
**characterized in that** the controller (170, 510) is further configured to:
control the light source driving circuit to apply a plurality of backlight on signals to the plurality of light sources of each backlight block in an insertion interval of the black frame when operating in the image output mode.

2. The display device of claim 1, wherein the plurality of backlight on signals have a unit duty and the unit duty is smaller than the duty of the light source driving signal.

3. The display device of claim 1, or 2, wherein the controller (170, 510) is configured to control the light source driving circuit to apply the plurality of backlight on signals to the light source in the insertion interval of the black frame, and the time intervals at which the plurality of backlight on signals are applied to the light source are the same each other.

4. The display device of claim 1, 2, or 3, wherein the controller (170, 510) is configured to control the light source driving circuit to apply the plurality of backlight on signals to the light source in the insertion interval of the black frame, and the time intervals at which the plurality of backlight on signals are applied to the light source are different from each other.

5. The display device of claim 4, wherein the time intervals between the plurality of backlight on signals gradually increase or decrease.

6. The display device of any one of claims 1 to 5, wherein the controller (170, 510) is configured to control the light source driving circuit to apply the plurality of backlight on signals to the light source in the insertion interval of the black frame, and duties of the plurality of backlight on signals are the same as each other.

7. The display device of any one of claims 1 to 6, wherein the controller (170, 510) is configured to control the light source driving circuit to apply the plurality of backlight on signals to the light source in the insertion interval of the black frame, and duties of the plurality of backlight on signals are different from each other.

8. The display device of claim 7, wherein duties of the plurality of backlight on signals sequentially increases or decreases.

9. The display device of any one of claims 1 to 8, wherein the controller (170, 510) is configured to control the light source driving circuit to apply the plurality of backlight on signals to the light source in the insertion interval of the black frame, and amplitudes of the plurality of backlight on signals are the same each other.

10. The display device of any one of claims 1 to 9, wherein the controller (170, 510) is configured to control the light source driving circuit to apply the plurality of backlight on signals to the light source in the insertion interval of the black frame, and amplitudes of the plurality of backlight on signals are different from each other.

11. The display device of claim 10, wherein amplitudes of the plurality of backlight on signals sequentially increase or decrease.

12. The display device of any one of claims 3 to 11, wherein amplitudes of the plurality of backlight on signals are the same each other, and duties of the plurality of backlight on signals are the same or different from each other.

13. The display device of any one of claims 3 to 12, wherein the amplitudes of the plurality of backlight on signals are different from each other, and duties of the plurality of backlight on signals are the same each other or different from each other.

14. The display device of any one of claims 1 to 13, wherein the controller (170, 510) is configured to control the light source driving circuit to apply the plurality of backlight on signals to the light source according to increased driving frequency when a driving frequency of the light source driving signal is increased.

15. A method of operating a display device (100), wherein the display device comprises a liquid crystal display panel (210), a plurality of backlight blocks configured to output a light to the liquid crystal display panel, wherein each backlight block includes a plurality of light sources and each light source (252) is formed of KSF, Potassium fluorosilicate, phosphor, a light source driving circuit (256) configured to generate a light source driving signal with a duty for controlling light output of each backlight block, wherein the light source driving signal is applied to the plurality of light sources of each backlight block in a display interval of an image frame,
wherein the method comprises:
determining whether the display device is operating in an image output mode that inserts a black frame between image frames; and
controlling the light source driving circuit to apply a plurality of backlight on signals to the plurality of light sources of each backlight block in the insertion interval of the black frame when operating in the image output mode.
